# EUROPEAN PATENT SPECIFICATION

(11) **EP 1 792 820 B1**
(45) Date of publication and mention of the grant of the patent: **16.06.2010**
(21) Application number: 05026315.1
(22) Date of filing: 02.12.2005
(51) Int. Cl.: B62M 3/00

(54) **Crank assembly for a bicycle bottom bracket, shaft and pedal crank thereof**
Kurbeleinheit für das Tretlager, die Antriebswelle und die Tretpedalkurbel eines Fahrrads
Ensemble de pédalier pour pédalier, axe et manivelle de pédalier de bicyclette

(43) Date of publication of application: 06.06.2007
(73) Proprietor: CAMPAGNOLO S.R.L., I-36100 Vicenza (IT)
(72) Inventor: Meggiolan, Mario, 36051 Creazzo (Vicenza) (IT); Valle, Maurizio, 36100 Vicenza (IT)
(74) Representative: Castiglia, Paolo

(56) References cited:
- EP-A- 0 756 991
- FR-A- 934 104
- FR-A- 2 801 863
- US-A- 535 706
- US-A- 593 562
- US-A- 594 109
- US-A- 648 077
- US-A- 846 239
- US-A- 951 137
- US-A- 4 331 043
- US-A- 4 704 919
- US-A- 6 116 114
- US-A1- 2001 049 976

## Description

The present invention relates to a crank assembly for a bicycle bottom bracket. The invention also relates to a shaft and a pedal crank for such a crank assembly.

The invention also relates to a bicycle bottom bracket assembly comprising the aforementioned crank assembly and to a bicycle comprising the aforementioned bottom bracket assembly.

As known, the bottom bracket of a bicycle comprises a shaft and two pedal cranks associated with the opposite ends of the shaft. The shaft can be made in a separate piece from the pedal cranks or it can be made in a single piece with one of the two pedal cranks. The shaft can also consist of two separate pieces (known as half-shafts) that can be coupled together, each of the two half-shafts being made in a single piece with a respective pedal crank.

The component of the bicycle bottom bracket consisting of a pedal crank and a shaft (or a half-shaft) coupled together or made in a single piece is identified with the expression: crank assembly.

The bottom bracket is mounted on the bicycle housing the shaft in a housing box suitably provided in the bicycle frame. The rotation of the bottom bracket with respect to the bicycle frame is achieved by fitting a pair of rolling bearings onto the shaft. Each bearing is positioned on the shaft at a respective shaft body portion adjacent to the pedal crank and, when the bottom bracket is mounted on the bicycle frame, is operatively arranged between the shaft and the housing box provided in the frame.

Due to the load applied by the cyclist on the pedals during pedalling, both the shaft and the pedal cranks of the bicycle bottom bracket are subjected to high bending stresses. Such stresses, if not suitably counteracted, cause the shaft and/or the pedal cranks to bend. Such a deformation means a reduction in the efficiency of pedalling and can lead to the shaft and/or the pedal cranks breaking.

An ever-present demand of bicycle component manufacturers, above all for racing bicycles, is therefore to minimise the bending deformations of the shafts and of the pedal cranks of the bottom brackets of bicycles, so as not to alter the efficiency of pedalling and to avoid the risk of components breaking.

Conventionally, the breaking of the shaft and, above all, of the pedal cranks takes place precisely at the shaft-pedal crank coupling zone. Such a zone is therefore a critical zone.

Solutions are known wherein the shaft is made in a single piece separate from the pedal cranks, wherein the shaft is made in a single piece with a pedal crank and wherein the shaft is made in two separate pieces (half-shafts), each of which is made in a single piece with a respective pedal crank. In the first case the bottom bracket is obtained by coupling the free ends of the shaft with respective pedal cranks. In the second case the bottom bracket is obtained by coupling the free end of the shaft with another pedal crank, whereas in the third case the bottom bracket is obtained by coupling the free ends of the two half-shafts. In the first two cases there is a coupling between a crank assembly and a pedal crank, whereas in the third case there is a coupling between two crank assemblies.

For example, US 5,493,937 describes a bicycle bottom bracket consisting of two crank assemblies coupled together head-to-head through a bolt. Each crank assembly comprises a half-shaft welded in a single piece with a respective pedal crank. The coupling between the two crank assemblies is positioned inside the housing box of the bottom bracket suitably provided in the bicycle frame. The shaft of the bottom bracket is rotatably supported in the housing box suitably provided in the bicycle frame through a pair of bearings fitted on the shaft at respective shaft body portions adjacent to the pedal cranks. The bearings are housed outside of the box of the frame through the interposition of a pair of adapters.

The Applicant has found that the solution described in the aforementioned patent has the drawback that the bending stress applied to each pedal crank transfers fully to the respective half-shaft, so that each half-shaft (and therefore the shaft consisting of the assembly of the two shaft elements) is subjected to a high bending deformation. Such a solution also has the drawback of requiring the use of crank assemblies each having a half-shaft of substantial length, such half-shafts being intended to be coupled to form a shaft of at least the same length as the axial distance between the two bearings. The great length of the shaft consisting of the junction of the two half-shafts implies a very large bending deformation at the middle of the shaft.

US 535,706 discloses a crank assembly wherein a crank is frontally coupled to a shaft by means of a wedge engaging a corresponding seat provided onto an end of the crank. A sleeve is provided which engages both the shaft and the crank and impedes their disengagement or mutual movements. A similar solution is also disclosed by US 593,562 and US 846,239.

US 648,077 discloses a crank assembly wherein the torque is transmitted from the crank to the shaft, and viceversa, by means of interlocking circumferential teeth, i.e. teeth provided onto the side surface of the crank which engage teeth provided onto the side surface of the shaft. A similar solution is also disclosed by EP-A-0756991, US 4,331,043, FR 934104 A, FR 2801863, US 4,704,919, US 951,137, US 594,109.

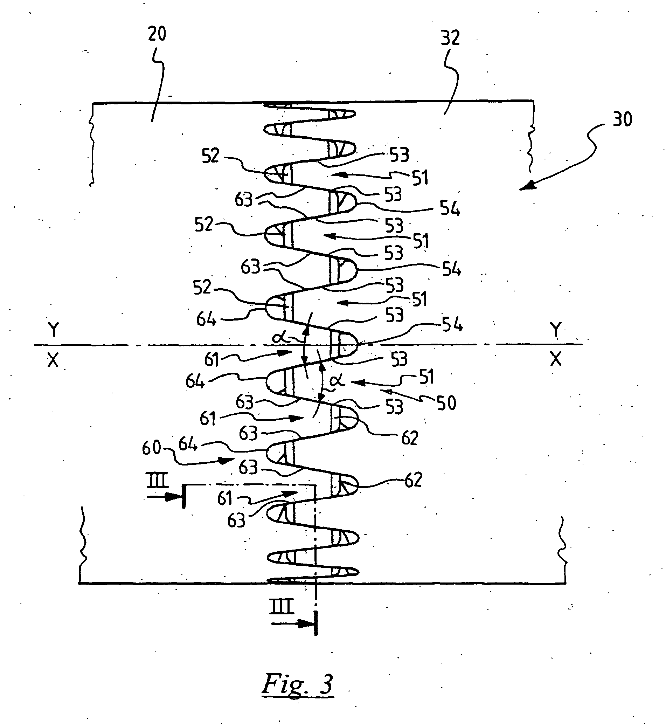

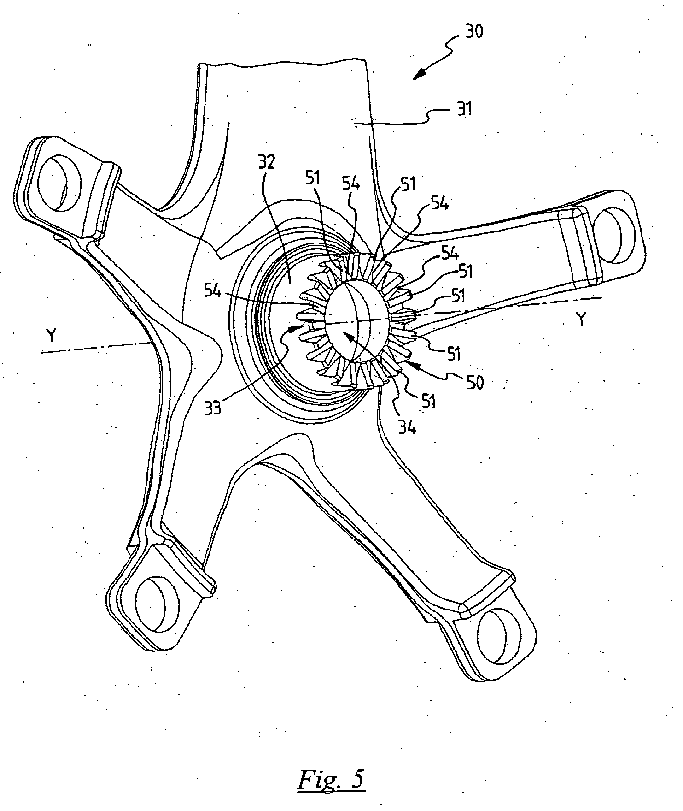

US 6,116,114 discloses a crank assembly wherein the crank and the corresponding shaft are frontally coupled by means of a threaded pin. Such coupling is not for transmitting torque. The threaded pin is a component distinct from the shaft and the crank. As shown in figure 3 and 5, circumferential teeth or grooves are provided onto the end portion of the crank to interlock corresponding internal teeth or projections of the shaft to transmit torque.

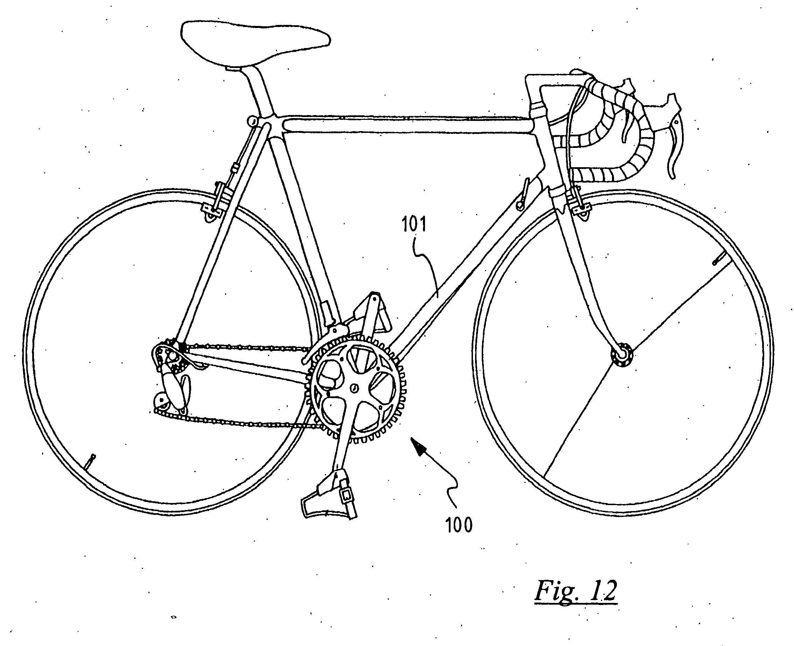

US 2001/0049976 on which the preambles of claims 1, 20 and 31 are based, repectively, discloses a crank assembly wherein the cranks are coupled at their ends by means of mating surfaces MS1 and MS2 integrally formed with the respective crank (figure 12). A double threaded tubular fastener is located within the front portions of the cranks to secure the coupling. Bending loads are transmitted.

The Applicant has therefore sought a new technical solution to the problem linked to the bending deformations of the shafts and pedal cranks of the bottom brackets of bicycles.

The object of the present invention is therefore to minimise the bending deformations of the shafts and pedal cranks of the bottom brackets of bicycles.

The present invention therefore relates, in a first aspect thereof, to a crank assembly for a bicycle bottom bracket, according to claim 1.

Throughout the present description and the subsequent claims, the expression "crank assembly" is used to indicate a component of the bicycle bottom bracket obtained by coupling a pedal crank with an end of the rotation shaft of the bottom bracket.

The shaft can be made in a single piece with the other pedal crank or in a piece separate from the other pedal crank. The shaft can also be made in two separate pieces (for the sake of simplicity known as shaft elements) that can be coupled together.

In the case of a shaft made in a single piece with the other pedal crank, the bottom bracket is obtained by the assembly of the crank assembly of the present invention. In the case of a shaft made in a piece separate from the other pedal crank, the bicycle bottom bracket is obtained by the coupling of the crank assembly of the present invention with another pedal crank. On the other hand, in the case of a shaft made in two pieces, the bottom bracket is obtained by the coupling of two crank assemblies of the present invention or of a crank assembly of the present invention with a crank assembly wherein the shaft is made in a single piece with the other pedal crank.

Throughout the present description and the subsequent claims, unless explicitly indicated otherwise, we shall refer, for the sake of simplicity, to a shaft made in a single piece. What is said does nevertheless have analogous application to the case in which the shaft is made in two separate pieces.

In accordance with the present invention, the front coupling between shaft and pedal crank advantageously introduces a structural discontinuity in the propagation of the bending stress from the crank to the pedal shaft, for which reason the bending load exerted on the pedal crank during pedalling is transmitted to the shaft to a much lesser degree. Even more advantageously, such a structural discontinuity is localised at the interface between shaft and pedal crank, i.e. in close proximity to the zone of the pedal crank at which the bending load is applied. The propagation of the bending stress is therefore interrupted at a section in which it is still minimal, given that in that section the arm of the bending torque is very small, practically zero.

The Applicant has therefore found out that it is possible to substantially reduce, if not actually almost entirely cancel out, the deformations of the shaft and of the pedal cranks of the bicycle bottom bracket, by introducing a structural discontinuity in the propagation of the bending stress from the pedal crank to the shaft in a section as close as possible to the zone of application of the bending load on the pedal crank. The Applicant has thus made a solution wherein the coupling means are front coupling means and such front coupling means are provided directly at the pedal crank-shaft interface, i.e. at the coupling surface of the pedal crank with the shaft.

Said first front coupling means comprise first rotation-driving means and said second front coupling means comprise second rotation-driving means.

Said first rotation-driving means comprise a first front toothing extending circumferentially on a front end surface of said shaft and said second rotation-driving means comprise a second front toothing extending circumferentially on a front end surface of a coupling portion of said pedal crank with said shaft.

In the preferred embodiment thereof, the crank assembly of the present invention also comprises centring means of said at least one pedal crank with respect to said shaft. Such centring means advantageously allow the precise alignment between the longitudinal axis of the shaft and the axis of the corresponding coupling portion of the pedal crank.

Preferably, as shall become clear in the rest of the present description, said centring means are defined by said first and second front toothings.

Said first and second front toothings comprise a plurality of identical and symmetrical teeth, each tooth of said plurality of teeth comprising a pair of side surfaces inclined, along a direction parallel to said longitudinal axis X-X, so as to form an angle α of predetermined value between them. Advantageously, the inclination of the side surfaces of the teeth along the axial direction of the shaft allows a shaft-pedal crank coupling to be achieved with high precision. Indeed, at each interface between tooth of the shaft and tooth of the pedal crank, a sliding plane is provided that allows microdisplacements of the pedal crank with respect to the shaft in the bending direction. Such microdisplacements reduce the transmission of the bending stress between the two components. Given that the sliding planes are positioned circumferentially with respect to the longitudinal axis of the shaft and to the axis of the corresponding coupling portion of the pedal crank, the aforementioned microdisplacements also occur during the rotation of the bottom bracket.

Preferably, said angle α has a value of between 14° and 40°. Advantageously, the Applicant has found that within such a range of values the axial thrusts between shaft and pedal crank are reduced to the point of allowing the use of a locking screw (necessary to axially lock the pedal crank to the shaft) of small size, i.e. such as to be able to allow the screw to be housed inside the shaft. This allows the use of a shaft having a central portion of greater diameter with respect to the end portions. Moreover, the housing of the screw inside the shaft makes the screwing and unscrewing operations of such a screw quicker and easier even when the bottom bracket is associated with the bicycle frame. Such a screw, indeed, can be immediately reached from the outside with a suitable tool without having to dismount the crank assembly from the frame.

In particular, the Applicant has found that a particularly preferred value of the angle α is 27°.

Said side surfaces of said tooth are also inclined with respect to a radial plane containing said longitudinal axis X-X, so as to form an angle β of predetermined value between them. Advantageously, the inclination of the side surfaces of the teeth along the radial direction perpendicular to the longitudinal axis of the shaft and to the axis of the corresponding coupling portion of the pedal crank ensures the centring of the shaft-pedal crank coupling.

Preferably, said angle β has a value equal to the standard value for a Hirth toothing.

To favour the aforementioned microdisplacements the contact between teeth of the shaft and teeth of the pedal crank occurs solely between the side surfaces of such teeth.

Preferably, each throat has a curved base surface joined to the side surfaces of said teeth.

In accordance with a preferred embodiment of the crank assembly of the present invention, such an assembly comprises at least one bearing adapted to allow the rotation of the bottom bracket with respect to a suitable housing box formed in the bicycle frame. The bearing is associated with said at least one pedal crank at a seat formed on an outer surface of the coupling portion with the shaft.

Advantageously, the arrangement of a seat for the bearing directly on the pedal crank allows the transmission of the bending stress from the pedal crank directly to the bicycle frame, i.e. without engaging the shaft. The latter is therefore free from any bending stresses. More advantageously, the housing of the bearing on the pedal crank allows the arm of the bending torque acting on the shaft and on the pedal crank itself to be substantially reduced, thus reducing the risk of breaking such components and at the same time improving the efficiency of pedalling. Even more advantageously, in this way it is possible to house the bearing outside of the housing box of the bottom bracket suitably provided in the bicycle frame. This allows the use of shafts having a diameter greater than that of the shafts conventionally used; the shaft of the present invention thus has a bending and twisting resistance greater than that of the shafts conventionally used.

In a first preferred embodiment of the bottom bracket assembly of the present invention, said seat is defined by an outer surface of said coupling portion of said pedal crank.

In a second preferred embodiment of the crank assembly of the present invention, said at least one pedal crank comprises a substantially annular pedal crank body portion that is radially outside of said coupling portion and wherein said seat is defined by an inner surface of said substantially annular pedal crank body portion.

The pedal crank of the crank assembly of the present invention can be a right pedal crank or a left pedal crank.

In a particularly preferred embodiment of the crank assembly of the present invention, said shaft comprises a central portion and opposite end portions, wherein said central portion has a diameter greater than that of said opposite end portions. Such a shaft advantageously has a structural bending and a twisting resistance greater than that of a shaft having cross sections with constant diameter.

Preferably, said shaft is made in a single piece. However, an alternative solution is foreseen wherein said shaft is made in two separate pieces coupled together through coupling means, preferably through front toothings of the type described above. A further alternative solution is also foreseen wherein said shaft is made integrally with the other pedal crank of the bicycle bottom bracket.

In a second aspect thereof, the present invention relates to a bottom bracket assembly that comprises a crank assembly of the type described above.

Throughout the present description and the subsequent claims, the expression "bottom bracket assembly", is used to indicate a component of the bicycle bottom bracket obtained by coupling a crank assembly as defined above with another pedal crank.

Preferably, the pedal crank of the crank assembly is a right or left pedal crank and also the other pedal crank of the bottom bracket assembly is coupled with the shaft through front coupling means of the type described above. The shaft, in this case, is thus made in a single piece separate from both of the pedal cranks.

Alternatively, the other pedal crank can be coupled with the shaft through a threaded coupling.

In a further alternative embodiment of the aforementioned bottom bracket assembly, the shaft is made in a single piece with the other pedal crank.

In the case in which the shaft is made in a single piece separate from the other pedal crank, the bottom bracket assembly thus comprises two pedal cranks and a shaft as described above. On the other hand, in the case in which the shaft is made in two pieces (shaft elements) separate from the respective pedal cranks, the bottom bracket assembly comprises two pedal cranks and two shaft elements as described above, i.e. two crank assemblies of the present invention. If the two shaft elements are of the same length, the two crank assemblies shall be perfectly identical (apart from the different shape of the right pedal crank from the left pedal crank). However, a solution is foreseen wherein the two shaft elements are of different lengths.

In a third aspect thereof, the present invention relates to a shaft for a bicycle bottom bracket, according to claim 20.

Such a shaft can advantageously be used to manufacture the crank assembly discussed above and, therefore, has all of the aforementioned advantageous characteristics with reference to the shaft of the crank assembly of the present invention.

Such a shaft has one or more of the structural characteristics discussed above as preferred characteristics of the shaft of the crank assembly of the present invention.

In a fourth aspect thereof, the present invention relates to a bicycle pedal crank according to claim 31.

Such a pedal crank can advantageously be used to manufacture the crank assembly discussed above and, therefore, has all of the aforementioned advantageous characteristics with reference to the pedal crank of the crank assembly of the present invention.

Such a pedal crank also has one or more of the structural characteristics discussed above as preferred characteristics of the pedal crank of the crank assembly of the present invention.

In a fifth aspect thereof, the present invention relates to a bicycle according to claim 41.

Advantageously, such a bicycle comprises the crank assembly of the present invention and therefore has all of the aforementioned advantageous characteristics.

The crank assembly used in the bicycle discussed above has one or more of the preferred structural characteristics discussed above with reference to the crank assembly of the present invention.

In a preferred embodiment of the bicycle of the present invention, said first and second front coupling means are arranged at an end zone of said box.

In a particularly preferred embodiment of the bicycle of the present invention, said first and second front coupling means are arranged outside said box.

In the particularly preferred embodiment thereof, the bicycle of the present invention also comprises a pair of bearings adapted to allow said bottom bracket to rotate in said box, wherein at least one bearing of said pair of bearings is arranged outside said box and at a seat defined on said at least one pedal crank of said pair of pedal cranks.

Further characteristics and advantages of the present invention shall become clearer from the following detailed description of some preferred embodiments thereof, made with reference to the attached drawings. In such drawings:
- figure 1 is a schematic view of a longitudinal section of a first embodiment of a bottom bracket assembly comprising a first embodiment of a crank assembly in accordance with the present invention;
- figure 2 is a view identical to that of figure 1 wherein the shaft and the corresponding coupling portion of the pedal crank are represented not in section;
- figure 3 is an enlarged side schematic view of the shaft-pedal crank coupling zone of the crank assembly illustrated in figure 1;
- figure 4 is a schematic view of a cross section of the shaft-pedal crank coupling zone of figure 3 taken along the lines III-III;
- figure 5 is a schematic perspective view of the right pedal crank of the crank assembly illustrated in figure 1;
- figure 6 is a schematic view of a longitudinal section of a second embodiment of a bottom bracket assembly comprising the crank assembly illustrated in figure 1;
- figure 7 is a schematic view of a longitudinal section of a bottom bracket assembly comprising an alternative embodiment of a crank assembly in accordance with the present invention;
- figure 8 is a schematic view of a longitudinal section of an end portion of a bottom bracket assembly comprising a further embodiment of a crank assembly in accordance with the present invention;
- figure 9 is a schematic perspective view of the right pedal crank of the crank assembly illustrated in figure 8;
- figure 10 is a schematic view, partially in longitudinal section, of a further embodiment of a bottom bracket assembly comprising the crank assembly illustrated in figure 1;
- figure 11 shows a detail of the pedal crank of figure 5;
- figure 12 shows a racing bicycle that comprises the bottom bracket of figure 1.

In the attached figures, a bottom bracket assembly of a bicycle is indicated with 1. Such a bicycle is indicated with 100 in figure 12. The bottom bracket assembly 1 is mounted on the frame 101 of the bicycle 100, in a suitable housing box 210.

The bottom bracket assembly 1 comprises a crank assembly 10 in accordance with the present invention. The bottom bracket assembly 1 in turn comprises a shaft 20, extending along a longitudinal axis X-X and having opposite free coupling ends 20a, 20b, and a pair of pedal cranks 30, 40 coupled with said free ends 20a, 20b of the shaft 20.

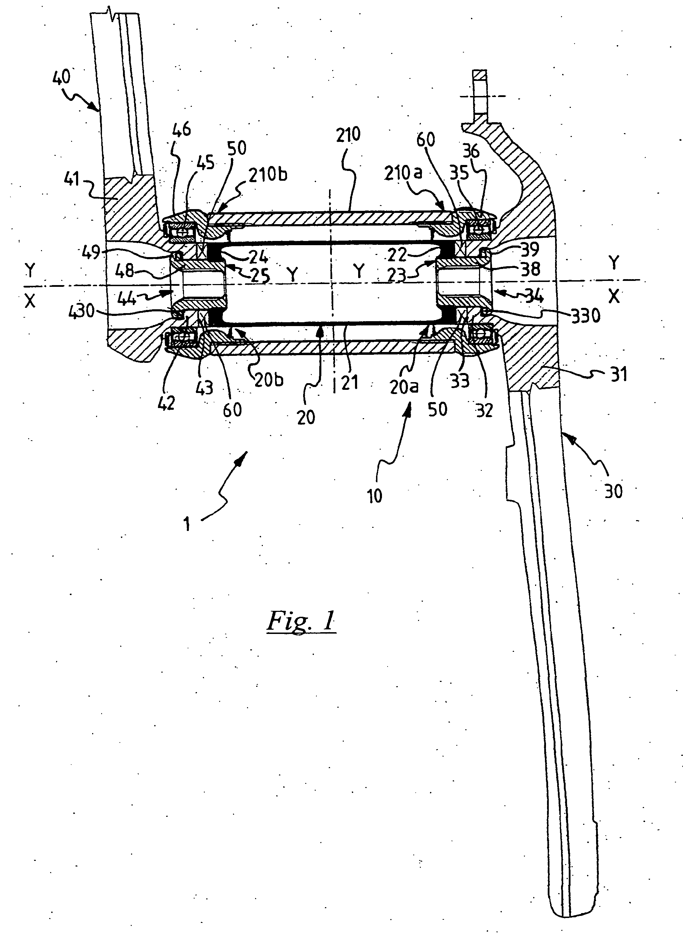

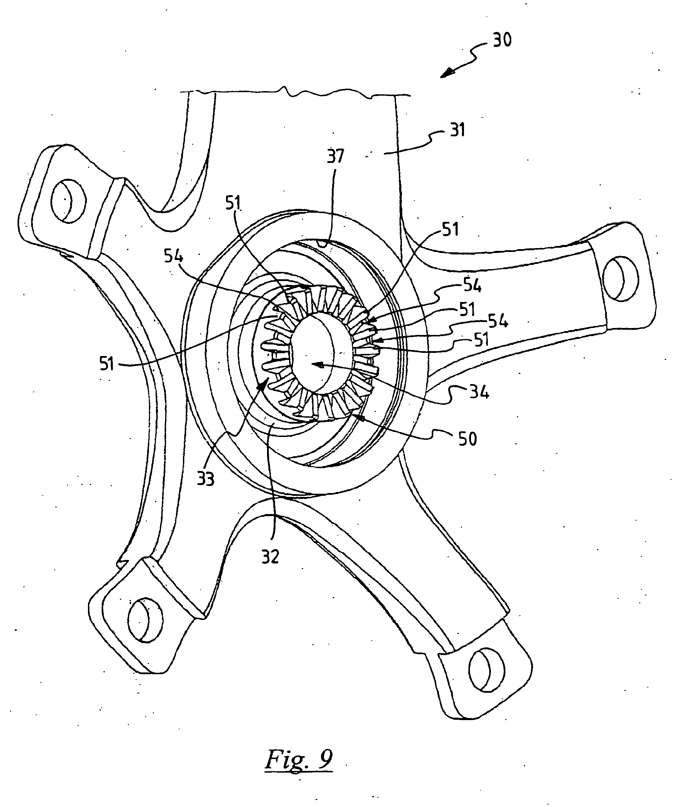

Figures 1, 2, 6-8 and 10 show various embodiments of the crank assembly 10, whereas figures 5 and 9 show just the pedal cranks 30 of the aforementioned assemblies.

The pedal crank 30 is a right pedal crank (of the branched type, illustrated better in figures 5 and 9) and is coupled with the free end 20a of the shaft 20, whereas the pedal crank 40 is a left pedal crank and is coupled with the free end 20b of the shaft 20.

The shaft 20, in particular, comprises a tubular body 21 made in a single piece. The shaft 20 is housed inside the housing box 210 suitably provided in the frame 101 of the bicycle 100. The shaft 20 extends longitudinally for a length substantially equal to the length of the housing box 210.

The shaft 20, at the free end 20a thereof, has a front surface 22 having, at its centre, a threaded hole 23. Similarly, the shaft 20, at the free end 20b thereof, has a front surface 24 having, at its centre, a threaded hole 25.

In the embodiment illustrated in figures 1, 2, 5-7, the pedal crank 30 comprises a body 31 having an annular coupling portion 32 projecting canti-levered from the rest of the body 31. The coupling portion 32 of the pedal crank 30 comprises substantially cylindrical radially outer and inner surfaces extending along an axis Y-Y and has an axially outer front coupling surface 33 with the free end 20a of the shaft 20 (see in particular figure 5) and an axially inner front surface 330. Similarly, the pedal crank 40 comprises a body 41 having an annular coupling portion 42 projecting canti-levered from the rest of the body 41. The body coupling portion 42 of the pedal crank 40 comprises substantially cylindrical radially outer and inner surfaces extending along an axis Y-Y and has an axially outer front coupling surface 43 with the free end 20b of the shaft 20 and an axially inner front surface 430.

At the coupling portion 32, the body 31 of the pedal crank 30 has a through hole 34 that extends up to the front coupling surface 33 with the shaft 20. Similarly, at the coupling portion 42, the body 41 of the pedal crank 40 has a through hole 44 that extends up to the front coupling surface 43 with the shaft 20.

The front surface 33 of the pedal crank 30 faces the front surface 22 of the shaft 20, with the through hole 34 coaxial to the threaded hole 23 of the shaft 20, whereas the front surface 43 of the pedal crank 40 faces the front surface 24 of the shaft 20, with the through hole 44 coaxial to the threaded hole 25 of the shaft 20. The axes Y-Y of the pedal cranks 30, 40 therefore, once they are coupled with the shaft 20, are aligned with the longitudinal axis X-X of the latter.

The bottom bracket 1 is supported in rotation within the box 210 by a pair of ball bearings, respectively indicated with 35 and 45. Such bearings 35, 45 are associated with the pedal cranks 30 and 40 and are positioned outside the housing box 210 of the shaft 20, thanks to the use of suitable adapters 36, 46 described below.

In particular, the bearing 35 is active between an annular adapter 36, screwed into a free end 210a of the box 210, and the pedal crank 30. Similarly, the bearing 45 is active between an annular adapter 46, screwed into the free end 210b of the box 210, and the pedal crank 40.

As shown in figures 1, 2, 5, 6, 7 and 10, the adapters 36 and 46 consists of a ring nut having a cylindrical body portion, externally threaded, intended to be screwed onto an inner threading made at the end of the box 210 of the frame 101 and an opposite cylindrical body portion having a smooth surface that is intended to operate in radial abutment against a race ring of the bearing 35, 45.

In a first embodiment of the pedal cranks, illustrated in figures 1, 2, 5, 6 and 7, the bearings 35, 45 are fitted, respectively, on the outer surface of the coupling portions 32, 42 of the pedal cranks 30, 40. Such outer surfaces thus define housing seats for the inner race ring of the bearings 35, 45, whereas the outer race ring thereof operates in radial abutment against a smooth inner surface of the adapters 36, 46.

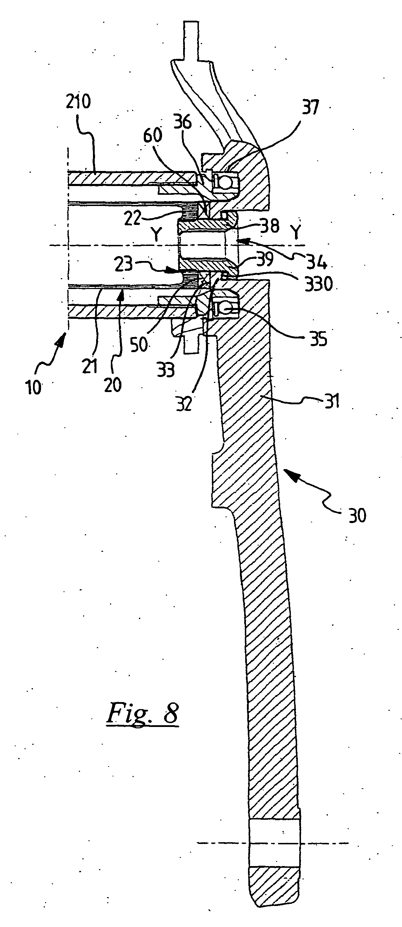

In an alternative embodiment of the pedal cranks, illustrated in figures 8 and 9 with particular reference to a right pedal crank 30, the body 31 of the pedal crank 30 has a substantially annular portion 37 radially outside the coupling portion 32. In this embodiment, the bearings operate between an inner surface of said annular body portion 37 of the pedal crank 30 and a smooth outer surface of the adapter 36. The inner surface of the annular body portion 37 of the pedal crank 30 thus defines a radial abutment surface for the outer race ring of the bearing 35, whereas the smooth outer surface of the adapter 36 defines a radial abutment seat for the inner race ring of the bearing 35. The left pedal crank of the bottom bracket that engages the right pedal crank described above shall be totally identical, with reference to the housing portion of the respective bearing, to such a right pedal crank.

In a further embodiment that is not illustrated, the bearings 35, 45 are fitted on the opposite end portions 20a, 20b of the shaft 20. In such a case the shaft 20 is longer than the housing box 210 provided in the frame 101 of the bicycle 100 by a length at least equal to twice the length of the race rings of the bearings. In such a case the coupling portion 32, 42 of the pedal cranks 30, 40 may not be present.

With reference to figures 1, 2, 7, 8, the pedal crank 30 is coupled with the free end 20a of the shaft 20 through a screw 38 inserted into the through hole 34 of the pedal crank 30 and screwed into the threaded hole 23 of the shaft 20. Similarly, the pedal crank 40 is coupled with the free end 206 of the shaft 20 through a screw 48 inserted into the through hole 44 of the pedal crank 40 and screwed into the threaded hole 43 of the shaft 20.

The screws 38, 48 comprise respective annular flanges 39, 49 that, at the end of locking, abut against the surfaces 330, 430 of the coupling portions 32, 42 of the pedal cranks 30, 40.

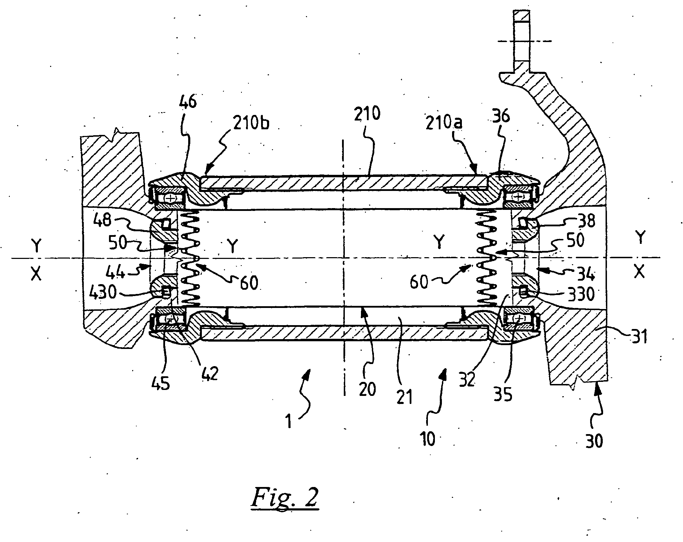

The pedal cranks 30, 40 are also coupled with the opposite free ends 20a, 20b of the shaft 20 through respective front toothings. In particular, a front toothing 50 is formed on the front surface 33 of the pedal crank 30 and on the front surface 43 of the pedal cranks 40, whereas a front toothing 60 matching the toothing 50 is formed on the outer faces of the opposite front surfaces 22 and 24 of the shaft 20. The front toothing 50 extends circumferentially on the front surfaces 33, 43 of the pedal cranks 30, 40, whereas the front toothing 60 extends circumferentially on the opposite front surfaces 22, 24 of the shaft 20. The front toothings 50 and 60, coupling together, make the shaft 20 and the pedal cranks 30 and 40 integral in rotation. Figures 2-4 and 6 show the toothings 50 and 60 coupled with each other.

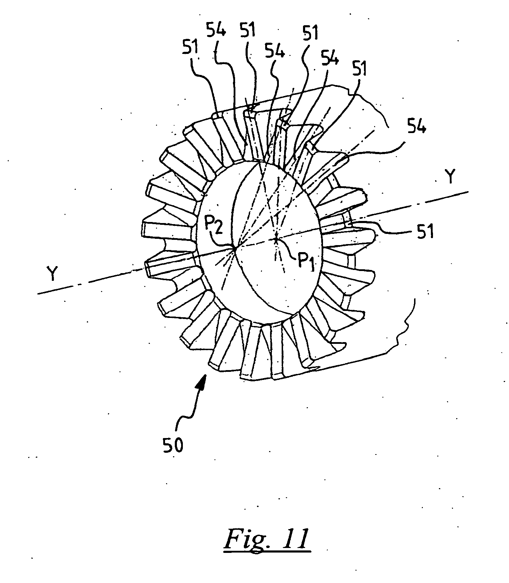

Figures 5 and 11, on the other hand, clearly show the toothing 50 of the pedal crank 30.

The front toothings 50 and 60 preferably comprise a plurality of identical and symmetrical teeth. As shown in particular in figure 3, the teeth of the front toothings 50 of the pedal cranks 30 and 40 are indicated with 51, whereas the teeth of the front toothings 60 of the shaft 20 are indicated with 61. Each tooth 51 of the front toothing 50 comprises a top surface 52 and two side surfaces 53. The teeth 51 are spaced apart by throats 54. Similarly, each tooth 61 of the front toothing 60 comprises a top surface 62 and two side surfaces 63. The teeth 61 are spaced apart by throats 64.

Each throat 54, 64 is defined between two adjacent teeth 51, 61 and has a curved base surface joined to the side surfaces 53, 63 of said teeth.

The side surfaces 53 and 63 of the teeth 51 and 61 are inclined, along a direction parallel to the longitudinal axis X-X of the shaft 20 and to the axis Y-Y of the pedal cranks 30 and 40, so as to form an angle α between them having a value preferably comprised between 14° and 40°, more preferably equal to 27°.

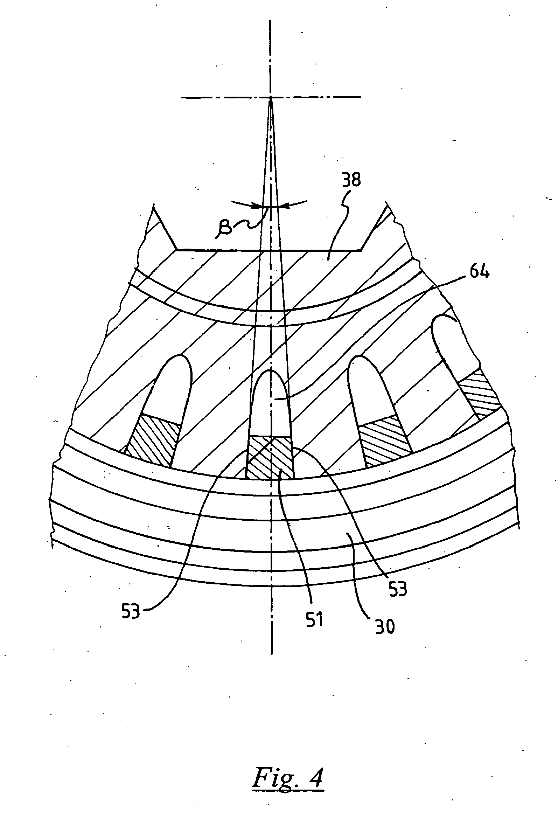

As shown in figure 4, the side surfaces 53 and 63 of the teeth 51 and 61 are also inclined with respect to a radial plane containing said longitudinal axis X-X of the shaft 20 and said axis Y-Y of the pedal cranks 30 and 40, so as to form an angle β between them having a value preferably equal to the standard value of a Hirth toothing.

Figure 11 shows the front toothing 50 of the pedal crank 30 in detail. The toothing 60 of the shaft 20 is preferably identical, as well as the toothing 50 of the pedal crank 40 in the case in which it is coupled with the shaft in a way similar to the way of the pedal crank 30. The front toothing 50 comprises in particular twenty teeth 51 alternating with twenty throats 54; the number of teeth and of throats can be different, but it is preferably even in number.

It can be seen how the top surfaces of each tooth 51 lie on an ideal cone with vertex in the point P1 on the axis Y-Y. The bottom surfaces of each throat 54 also lie on an ideal cone, but with opposite concavity to the previous one, and with the vertex in the point P2, again on the axis Y-Y.

Basically, the teeth 51 and 61 are wedge-shaped tapered in the axial direction with an angle α and in the radial direction with an angle β. As a consequence of such geometry of the teeth, a coupling with toothing of the type described above provides, in general, the contact just between the side surfaces of the teeth 53. The coupling of all of the wedges of the front toothing 50 with those of the front toothing 60 ensures the centring of the shaft-pedal crank coupling.

As already stated, the contact between the teeth 61 of the shaft 20 and the teeth 51 of the pedal cranks 30 and 40 occurs solely between the side surfaces 53, 63 of such teeth. However, a solution is foreseen wherein the throats 54 and 64 of the toothings 50 and 60 are inclined in the axial and radial direction in a similar way to what has been stated above with reference to the teeth of the shaft and of the pedal cranks. In such a case, the contact between the toothings 50 and 60 can also, or solely, occur at the surfaces of such throats.

In the case in which the coupling portion 32, 42 of the pedal cranks 30, 40 is not present (this case has been discussed above with reference to the solution wherein the bearings 35, 45 are fitted on the opposite ends of the shaft 20), the front toothing 50 is made directly on a face of the body of the pedal cranks 30, 40 not projecting from the rest of the body of the pedal cranks itself (see for example figure 9).

In any case, the front toothing 50 of the pedal cranks 30, 40 is made with respect to the body of the pedal cranks themselves in such a way that, when the bottom bracket is associated with the frame 101 of the bicycle 100, such a toothing is coupled with that of the shaft in an end zone 210a, 210b of the housing box 210 provided in the frame 101, or outside of the housing box, and the bearings are also positioned in the aforementioned end zone or outside of the aforementioned box 210.

In a preferred embodiment of the bottom bracket assembly of the present invention, discussed above with reference to figures from 1 to 5, the pedal cranks 30 and 40 are coupled with the shaft 20 in an identical way.

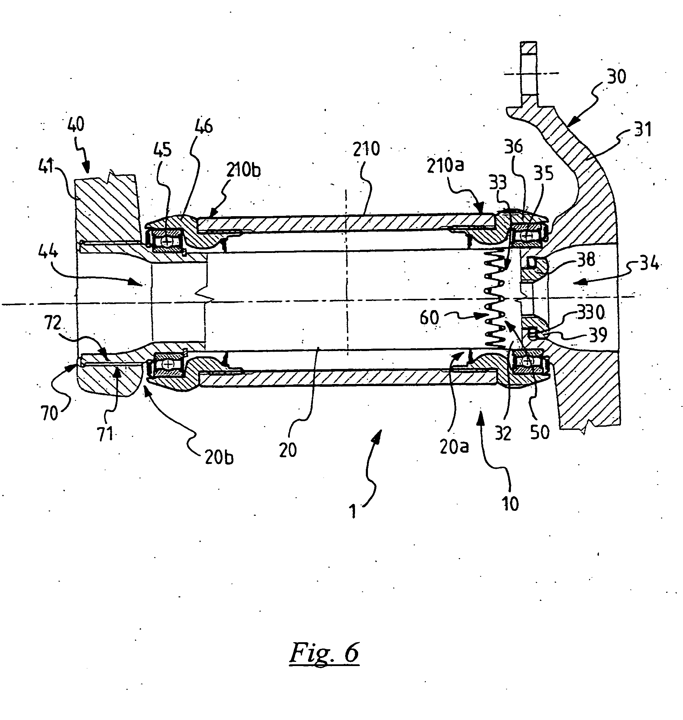

Figure 6 shows an alternative embodiment of the bottom bracket assembly 1 of the present invention. Such an embodiment differs from the one described with reference to figures 1-5 for the sole reason that the left pedal crank 40 is associated with the shaft 20 through a threaded coupling 70. Such a threaded coupling 70 comprises an outer threading 71 made on the end portion 20b of the shaft 20 and an inner threading 72, matching the threading 71, made in the hole 44 of the pedal crank 40. In such an embodiment, the shaft 20 is of a length such that its end portion 20b projects from the box 210 of the frame 101. The bearing 45 is fitted onto such a shaft portion projecting from the box 210.

In the embodiments of the bottom bracket assembly described above, the shaft 20 has a constant diameter along its longitudinal extension.

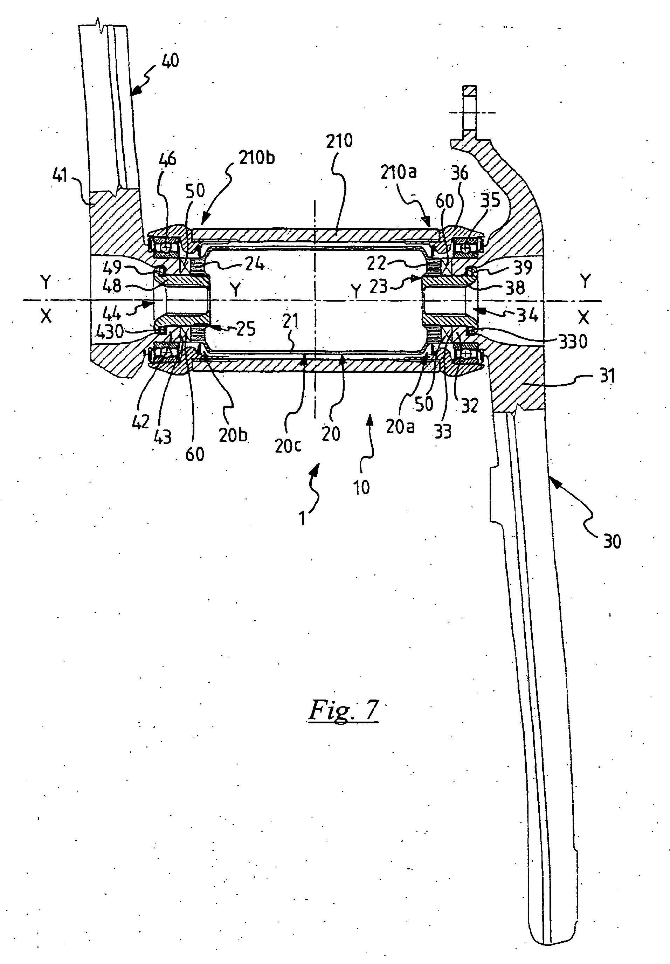

Figure 7 shows a further embodiment of the bottom bracket assembly of the present invention. Such an embodiment differs from the one described previously with reference to figures from 1 to 5 for the sole reason that the shaft 20 has a central portion 20c having a diameter greater than that of said opposite end portions 20a, 20b.

What has been stated above remains valid in the case in which the shaft 20 is made in two separate pieces (shaft elements). Such two pieces of shaft shall each be coupled with a pedal crank in the way described above and shall also be coupled together, preferably, through front toothings of the type described above.

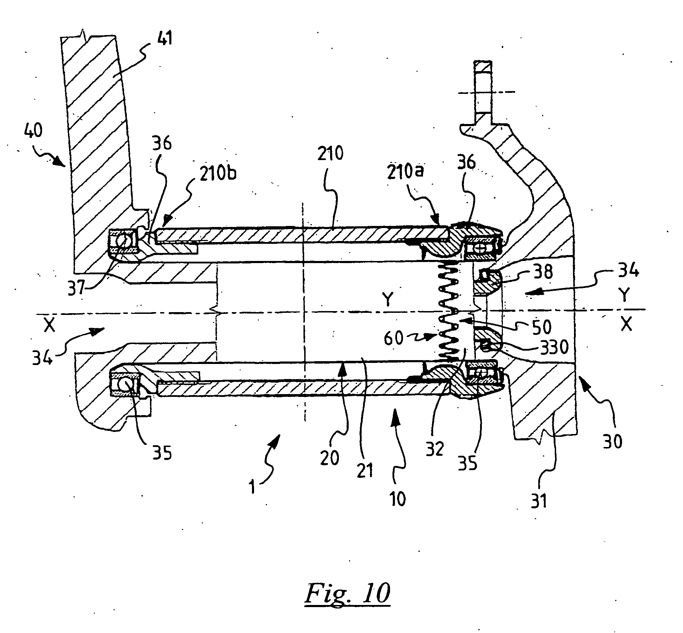

Figure 10 shows a further alternative embodiment of the bottom bracket assembly of the present invention. Such an embodiment differs from the one described previously with reference to figures 1-5 for the sole reason that the left pedal crank 40 is made in a single piece with the shaft 20. In such a case, to avoid transferring to the shaft 20 of the bending load to which the pedal crank 40 is subjected during pedalling, a pedal crank of the type illustrated in figures 8 and 9 is used, where, however, the front toothing 50 is absent since the body 41 of the pedal crank 40 is made integrally with the body 21 of the shaft 20. In particular, the left bearing 35 operates between the inner surface of the annular portion 37 of the body 41 of the pedal crank 40 and a smooth outer surface of the left adapter 36. Such an adapter 36 is screwed to the end 210b of the housing box 210 provided in the frame 101 and projects canti-levered from this end. The inner surface of the annular body portion 37 of the pedal crank 40 thus defines a radial abutment surface for the outer race ring of the left bearing 35, whereas the smooth outer surface of the adapter 36 defines a radial abutment seat for the inner race ring of the bearing 35.

## Claims

1. Crank assembly (10) for a bicycle bottom bracket, comprising:
- a shaft (20) extending along a longitudinal axis (X-X) and comprising an end face at at least one free end (20a, 20b);
- at least one pedal crank (30, 40) having an end face associated with the at least one free end face of said shaft (20);
- coupling means (50, 60) between said shaft (20) and said at least one pedal crank (30, 40);
wherein said coupling means (50, 60) comprise first front coupling means (60) formed on said free end face of said shaft (20) and second front coupling means (50) formed on said at least one pedal crank end face, said first and second front coupling means (50, 60) being coupled together, wherein said first front coupling means (60) comprise first rotation-driving means and said second front coupling means (50) comprise second rotation-driving means, wherein said first rotation-driving means comprise a first front toothing (60) extending circumferentially on the front end face (22, 24) of said shaft (20) and said second rotation-driving means comprise a second front toothing (50) arranged circumferentially on the front end face (33, 43) of a coupling portion (32, 42) of said pedal crank (30, 40) with said shaft (20), **characterized in that**
said first and second front toothings (60, 50) comprise a plurality of identical and symmetrical teeth (61, 51), each tooth (61, 51) of said plurality of teeth comprising a pair of side surfaces (63, 53) inclined, in a direction parallel to said longitudinal axis (X-X), so as to form an angle α between them having a first predetermined value,
the contact between the teeth (61) of said shaft (20) and the teeth (51) of said pedal crank occurs solely between the related side surfaces (63, 53).

2. Crank assembly (10) according to claim 1, further comprising centring means of said at least one pedal crank (30, 40) with respect to said shaft (20).

3. Crank assembly (10) according to claim 2, wherein said centring means are defined by said first and second front toothings (60, 50).

4. Crank assembly (10) according to claim 1, wherein said first value is between 14° and 40°.

5. Crank assembly (10) according to claim 4, wherein said first value is equal to 27°.

6. Crank assembly (10) according to any one of claims from 1 to 5, wherein said side surfaces (63, 53) of said tooth (61, 51) are inclined with respect to a radial plane containing said longitudinal axis (X-X), so as to form an angle β between them having a second predetermined value.

7. Crank assembly (10) according to any one of claims from 1 to 6, wherein said first and second front toothings (60, 50) comprise a plurality of throats (64, 54), wherein each throat (64, 54) is defined between two adjacent teeth (61, 51) and has a curved base surface joined to said side surfaces (63, 53) of said teeth (61, 51).

8. Crank assembly (10) according to any one of the previous claims, wherein said at least one pedal crank (30, 40) comprises a seat for housing a bearing (35, 45) adapted to allow the rotation of the bottom bracket with respect to a housing box (210) of said shaft (20) formed in a frame (101) of a bicycle (100).

9. Crank assembly (10) according to claim 8 when depending on claim 2, wherein said seat is defined by an outer surface of said coupling portion (32, 42) of said at least one pedal crank (30, 40).

10. Crank assembly (10) according to claim 8 when depending on claim 1, wherein said at least one pedal crank (30, 40) comprises a substantially annular pedal crank body portion (37, 47) radially outside with respect to said coupling portion (32, 42) and wherein said seat is defined by an inner surface of said substantially annular pedal crank body portion (37, 47).

11. Crank assembly (10) according to any one of claims from 8 to 10, further comprising a rolling bearing (35, 45) associated with said at least one pedal crank (30, 40) at said seat.

12. Crank assembly (10) according to any one of the previous claims, wherein said at least one pedal crank is a right pedal crank (30).

13. Crank assembly (10) according to any one of claims from 1 to 11, wherein said at least one pedal crank is a left pedal crank (40).

14. Crank assembly (10) according to any one of the previous claims, wherein said shaft (20) comprises a central portion (20c) and opposite end portions (20a, 20b) and wherein said central portion (20c) has a diameter greater than that of said opposite end portions (20a, 20b).

15. Bottom bracket assembly (1) of a bicycle, comprising a crank assembly (10) according to any one of the previous claims.

16. Bottom bracket assembly (1) according to claim 15, wherein the shaft (20) of said crank assembly (10) is made in a single piece with a pedal crank (40, 30) opposite the pedal crank (30, 40) of said crank assembly (10).

17. Bottom bracket assembly (1) according to claim 15, wherein the shaft (20) of said crank assembly (10) is made in two separate pieces coupled together through coupling means.

18. Bottom bracket assembly (1) according to claim 17, wherein said coupling means are front coupling means.

19. Bottom bracket assembly (1) according to claim 15, wherein the pedal crank (30, 40) of said crank assembly (10) is a right pedal crank or a left pedal crank and wherein the other pedal crank (40, 30) is coupled with said shaft (20) through a threaded coupling (70).

20. Shaft (20) for a bicycle bottom bracket, comprising a body (21) extending along a longitudinal axis (X-X), said body (21) comprising, at an end face of at least one free end (20a, 20b) thereof, coupling means for coupling with the pedal crank (30, 40) according to claim 31, said coupling means comprise front coupling means (60), wherein said front coupling means (60) comprise rotation-driving means for said at least one pedal crank (30, 40), and
wherein said rotation-driving means comprise a front toothing (60) arranged circumferentially on the front end face of said body (21),
**characterized in that**
said front toothing (60) comprises a plurality of identical and symmetrical teeth (61), each tooth (61) of said plurality of teeth comprising a pair of side surfaces (63) inclined, in a direction parallel to said longitudinal axis (X-X), so as to form an angle α between them having a first predetermined value,
said teeth (61) are designed to match the teeth of the pedal crank according to claim 31 such that the contact between the teeth (61) of said shaft (20) and the teeth (51) of said pedal crank occurs solely between the related side surfaces (63, 53).

21. Shaft (20) according to claim 20, further comprising centring means of said at least one pedal crank (30, 40) with respect to said shaft (20).

22. Shaft (20) according to claim 20 or claim 21, wherein said first value is between 14' and 40°.

23. Shaft (20) according to claim 22, wherein said first value is equal to 27°.

24. Shaft (20) according to any one of claims from 20 to 23, wherein said side surfaces (63) of said tooth (61) are inclined with respect to a radial plane containing said longitudinal axis (X-X), so as to form an angle β between them having a second predetermined value.

25. Shaft (20) according to any one of claims from 20 to 24, wherein said front toothing (60) comprises a plurality of throats (64), wherein each throat (64) is defined between two adjacent teeth (61) and has a curved base surface joined to said side surfaces (63) of said teeth (61).

26. Shaft (20) according to any one of claims from 20 to 25, comprising, at an end portion (20b) thereof, an outer threading (70).

27. Shaft (20) according to any one of claims from 20 to 26, wherein said body (21) comprises a central portion (20c) and opposite end portions (20a, 20b), wherein said central portion (20c) has a diameter greater than that of said end portions (20a, 20b).

28. Shaft (20) according to any one of claims from 20 to 27, wherein said body (21) is made in a single piece.

29. Shaft (20) according to any one of claims from 20 to 27, wherein said body (21) is made in two separate pieces coupled together through coupling means.

30. Shaft (20) according to claim 29, wherein said coupling means are front coupling means.

31. Pedal crank (30, 40) for a bicycle, comprising a body (31, 41) having an end face provided with a coupling portion (32, 42) for coupling with the shaft (20) for a bicycle bottom bracket according to claim 20, said coupling portion (32, 42) expending along an axis (Y-Y) and comprising, at the free end face thereof, coupling means for coupling with said shaft (20), said coupling means comprise front coupling means (50), wherein said front coupling means (50) comprise rotation-driving means for said shaft (20), wherein
said rotation-driving means comprise a front toothing (50) arranged circumferentially on the front face (33, 43) of a coupling portion (32, 42) of said pedal crank body (31, 41),
**characterized in that**
said front toothing (50) comprises a plurality of identical and symmetrical teeth (51), each tooth (51) of said plurality of teeth comprising a pair of side surfaces (53) inclined, in a direction parallel to said longitudinal axis (Y-Y), so as to form an angle α between them having a first predetermined value,
said teeth (51) are designed to match the teeth (61) of the shaft according to claim 20 such that the contact between the teeth (61) of said shaft (20) and the teeth (51) of said pedal crank occurs solely between the related side surfaces (63, 53).

32. Pedal crank (30, 40) according to claim 31, further comprising centring means of said shaft (20) with respect to said pedal crank (30, 40).

33. Pedal crank (30, 40) according to claim 31 or claim 32, wherein said first value is between 14° and 40°.

34. Pedal crank (30, 40) according to claim 33, wherein said first value is equal to 27°.

35. Pedal crank (30, 40) according to any one of claims 31 to 34, wherein said side surfaces (53) of said tooth (51) are inclined with respect to a radial plane containing said longitudinal axis (Y-Y), so as to form an angle β between them having a second predetermined value.

36. Pedal crank (30, 40) according to any one of claims 31 to 35, wherein said front toothing (50) comprises a plurality of throats (54), wherein each throat (54) is defined between two adjacent teeth (51) and has a curved base surface joined to said side surfaces (53) of said teeth (51).

37. Pedal crank (30, 40) according to any one of claims from 31 to 36, comprising a seat for housing a bearing (35, 45) adapted to allow the rotation of said pedal crank (30, 40), when associated with said shaft (20), with respect to a housing box (210) of said shaft (20) formed in a frame (101) of a bicycle (100).

38. Pedal crank (30, 40) according to claim 37, wherein said seat is defined by an outer surface of said coupling portion (32, 42) of said pedal crank body (31, 41).

39. Pedal crank (30, 40) according to claim 37, comprising a substantially annular pedal crank body portion (37, 47) radially outside with respect to said coupling portion (32, 42), said seat being defined by an inner surface of said substantially annular pedal crank body portion (37, 47).

40. Pedal crank (30, 40) according to any one of claims from 31 to 39, wherein said pedal crank is a right pedal crank (30).

41. Bicycle (100), comprising a frame (101) provided with a housing box (210) of a shaft (20) of a bottom bracket, said shaft (20) extending along a longitudinal axis (X-X), said bottom bracket also comprising a pair of pedal cranks (30, 40), at least one pedal crank of said pair of pedal cranks (30, 40) being associated with at least one free end (20a, 20b) of said shaft (20), and coupling means (50, 60) between said shaft (20) and said at least one pedal crank (30, 40);
**characterised in that** said shaft is a shaft according to any claim 20 to 30 and said at least one pedal crank is a pedal crank according to any claim 31 to 40.

42. Bicycle (100) according to claim 41, wherein said first and second front coupling means (60, 50) are arranged at an end zone (210a, 210b) of said box (210).

43. Bicycle (100) according to claim 41, wherein said first and second front coupling means (60, 50) are arranged outside said box (210).

44. Bicycle (100) according to any one of claims 41 to 43, also comprising a pair of bearings (35, 45) suitable for allowing the rolling of said bottom bracket in said box (210), wherein at least one bearing of said pair of bearings (35, 45) is arranged outside said box (210) and at a seat defined on said at least one pedal crank (30, 40) of said pair of pedal cranks.

## Patentansprüche

1. Kurbelbaugruppe (10) für ein Fahrrad-Tretlager, die umfasst:
- eine Welle (20), die sich entlang einer Längsachse (X-X) erstreckt und eine Endfläche an wenigstens einem freiem Ende (20a, 20b) umfasst;
- wenigstens eine Pedalkurbel (30, 40), die eine Endfläche hat, die mit der wenigstens einen freien Endfläche der Welle (20) verbunden ist;
- Kopplungseinrichtungen (50, 60) zwischen der Welle (20) und der wenigstens einen Pedalkurbel (30, 40);
wobei die Kopplungseinrichtungen (50, 60) eine erste vordere Kopplungseinrichtung (60), die an der freien Endfläche der Welle (20) ausgebildet ist, und eine zweite vordere Kopplungseinrichtung (50) umfasst, die an der wenigstens einen Pedalkurbel-Endfläche ausgebildet ist, die erste und die zweite vordere Kopplungseinrichtung (50, 60) miteinander gekoppelt sind, die erste vordere Kopplungseinrichtung (60) eine erste Drehantriebseinrichtung umfasst und die zweite vordere Kopplungseinrichtung (50) eine zweite Drehantriebseinrichtung umfasst, die erste Drehantriebseinrichtung eine erste vordere Verzahnung (60) umfasst, die sich in Umfangsrichtung an der vorderen Endfläche (22, 24) der Welle (20) erstreckt, und die zweite Drehantriebseinrichtung eine zweite vordere Verzahnung (50) umfasst, die in Umfangsrichtung an der vorderen Endfläche (33, 43) eines Kopplungsabschnitts (32, 42) der Pedalkurbel (30, 40) mit der Welle (20) angeordnet ist, **dadurch gekennzeichnet, dass** die erste und die zweite vordere Verzahnung (60, 50) eine Vielzahl identischer und symmetrischer Zähne (61, 51) umfassen, jeder Zahn (61, 51) der Vielzahl von Zähnen ein Paar seitlicher Flächen (63, 53) umfasst, die in einer Richtung parallel zu der Längsachse (X-X) geneigt sind, so dass zwischen ihnen ein Winkel α gebildet wird,
der einen ersten vorgegebenen Wert hat,
der Kontakt zwischen den Zähnen (61) der Welle (20) und den Zähnen (51) der Pedalkurbel nur zwischen den zusammenhängenden seitlichen Flächen (63, 53) vorhanden ist.

2. Kurbelbaugruppe (10) nach Anspruch 1, die des Weiteren eine Einrichtung zum Zentrieren der wenigstens einen Pedalkurbel (30, 40) in Bezug auf die Welle (20) umfasst.

3. Kurbelanordnung (10) nach Anspruch 2, wobei die Zentriereinrichtung durch die erste und die zweite vordere Verzahnung (60, 50) gebildet wird.

4. Kurbelanordnung (10) nach Anspruch 1, wobei der erste Wert zwischen 14° und 40° beträgt.

5. Kurbelanordnung (10) nach Anspruch 4, wobei der erste Wert 27° beträgt.

6. Kurbelanordnung (10) nach einem der Ansprüche von 1 bis 5, wobei die seitlichen Flächen (63, 53) des Zahns (61, 51) in Bezug auf eine radiale Ebene, die die Längsachse (X-X) einschließt, so geneigt sind, dass ein Winkel β zwischen ihnen gebildet wird, der einen zweiten vorgegebenen Wert hat.

7. Kurbelanordnung (10) nach einem der Ansprüche von 1 bis 6, wobei die erste und die zweite vordere Verzahnung (60, 50) eine Vielzahl von Verengungen (64, 54) umfassen und jede Verengung (64, 54) zwischen zwei benachbarten Zähnen (61, 51) gebildet wird und eine gekrümmte Basisfläche hat, die sich an die seitlichen Flächen (63, 53) der Zähne (61, 51) anschließt.

8. Kurbelanordnung (10) nach einem der vorangehenden Ansprüche, wobei die wenigstens eine Pedalkurbel (30, 40) einen Sitz zum Aufnehmen eines Lagers (35, 45) umfasst, das so eingerichtet ist, dass es die Drehung des Tretlagers in Bezug auf ein Aufnahmegehäuse (210) der Welle (20) zulässt, das in einem Rahmen (101) eines Fahrrades (100) ausgebildet ist.

9. Kurbelanordnung (10) nach Anspruch 8, wenn abhängig von Anspruch 2, wobei der Sitz durch eine Außenfläche des Kopplungsabschnitts (32, 42) der wenigstens einen Pedalkurbel (30, 40) gebildet wird.

10. Kurbelanordnung (10) nach Anspruch 8, wenn abhängig von Anspruch 1, wobei die wenigstens eine Pedalkurbel (30, 40) einen im wesentlichen ringförmigen Pedalkurbel-Körperabschnitt (37, 47) radial außerhalb in Bezug auf den Kopplungsabschnitt (32, 42) umfasst und der Sitz durch eine Innenfläche des im Wesentlichen ringförmigen Pedalkurbel-Körperabschnitts (37, 47) gebildet wird.

11. Kurbelanordnung (10) nach einem der Ansprüche von 8 bis 10, die des Weiteren ein Wälzlager (35, 45) umfasst, das mit der wenigstens einen Pedalkurbel (30, 40) an dem Sitz verbunden ist.

12. Kurbelanordnung (10) nach einem der vorangehenden Ansprüche, wobei die wenigstens eine Pedalkurbel eine rechte Pedalkurbel (30) ist.

13. Kurbelanordnung (10) nach einem der Ansprüche von 1 bis 11, wobei die wenigstens eine Pedalkurbel eine linke Pedalkurbel (40) ist.

14. Kurbelanordnung (10) nach einem der vorangehenden Ansprüche, wobei die Welle (20) einen Mittelabschnitt (20c) sowie einander gegenüberliegende Endabschnitte (20a, 20b) umfasst und der Mittelabschnitt (20c) einen Durchmesser hat, der größer ist als der der einander gegenüberliegenden Endabschnitte (20a, 20b).

15. Tretlageranordnung (1) eines Fahrrades, die eine Kurbelanardnung (10) nach einem der vorangehenden Ansprüche umfasst.

16. Tretlageranordnung (1) nach Anspruch 15, wobei die Welle (20) der Kurbelanordnung (10) im Unterschied zu der Pedalkurbel (30, 40) der Kurbelanordnung (10) aus einem Teil mit der Pedalkurbel (40, 30) besteht.

17. Tretlageranordnung (1) nach Anspruch 15, wobei die Welle (20) der Kurbelanordnung (10) aus zwei separaten Teilen besteht, die über eine Kopplungseinrichtung miteinander gekoppelt sind.

18. Tretlageranordnung (1) nach Anspruch 17, wobei die Kopplungseinrichtung eine vordere Kopplungseinrichtung ist.

19. Tretlageranordnung (1) nach Anspruch 15, wobei die Pedalkurbel (30, 40) der Kurbelanordnung (10) eine rechte Pedalkurbel oder eine linke Pedalkurbel ist und die andere Pedalkurbel (40, 30) mit der Welle (20) über eine Gewindekopplung (70) gekoppelt ist.

20. Welle (20) für ein Fahrrad-Tretlager, das einen Körper (21) umfasst, der sich entlang einer Längsachse (X-X) erstreckt, wobei der Körper (21) an einer Endfläche an wenigstens einem freien Ende (20a, 20b) desselben Kopplungseinrichtungen zum Koppeln mit der Pedalkurbel (30, 40) nach Anspruch 31 umfasst, die Kopplungseinrichtungen eine vordere Kopplungseinrichtung (60) umfasst, wobei die vordere Kopplungseinrichtung (60) eine Drehantriebseinrichtung für die wenigstens eine Pedalkurbel (30, 40) umfasst, und
die Drehantriebseinrichtung eine vordere Verzahnung (60) umfasst, die in Umfangsrichtung an der vorderen Endfläche des Körpers (21) angeordnet ist,
**dadurch gekennzeichnet, dass**
die vordere Verzahnung (60) eine Vielzahl identischer und symmetrischer Zähne (61) umfasst, jeder Zahn (61) der Vielzahl von Zähnen ein Paar seitlicher Flächen (63) umfasst, die in einer Richtung parallel zu der Längsachse (X-X) geneigt sind, so dass zwischen ihnen ein Winkel α gebildet wird, der einen ersten vorgegebenen Wert hat, die Zähne (61) so ausgeführt sind, dass sie den Zähnen der Pedalkurbel nach Anspruch 31 entsprechen, so dass Kontakt zwischen den Zähnen (31) der Welle (20) und den Zähnen (51) der Pedalkurbel nur zwischen den zusammenhängenden Seitenflächen (63, 53) vorhanden ist.

21. Welle (20) nach Anspruch 20, die des Weiteren eine Einrichtung zum Zentrieren der wenigstens einen Pedalkurbel (30, 40) in Bezug auf die Welle (20) umfasst.

22. Welle (20) nach Anspruch 20 oder 21, wobei der erste Wert zwischen 14° und 40° beträgt.

23. Welle (20) nach Anspruch 22, wobei der erste Wert 27° beträgt.

24. Welle (20) nach einem der Ansprüche von 20 bis 23, wobei die seitlichen Flächen (63, 53) des Zahns (61, 51) in Bezug auf eine radiale Ebene, die die Längsachse (X-X) einschießt, so geneigt sind, dass ein Winkel β zwischen ihnen gebildet wird, der einen zweiten vorgegebenen Wert hat.

25. Welle (20) nach einem der Ansprüche von 20 bis 24, wobei die erste und die zweite vordere Verzahnung (60, 50) eine Vielzahl von Verengungen (64, 54) umfassen und jede Verengung (64, 54) zwischen zwei benachbarten Zähnen (61, 51) gebildet wird und eine gekrümmte Basisfläche hat, die sich an die seitlichen Flächen (63, 53) der Zähne (61, 51) anschließt.

26. Welle (20) nach einem der Ansprüche von 20 bis 25, die an einem Endabschnitt (20b) derselben ein Außengewinde (70) umfasst.

27. Welle (20) nach einem der Ansprüche von 20 bis 26, wobei der Körper (21) einen Mittelabschnitt (20c) und einander gegenüberliegende Endabschnitte (20a, 20b) umfasst und der Mittelabschnitt (20c) einen Durchmesser hat, der größer ist als der der Endabschnitte (20a, 20b).

28. Welle (20) nach einem der Ansprüche von 20 bis 27, wobei der Körper (21) aus einem Stück besteht.

29. Welle (20) nach einem der Ansprüche von 20 bis 27, wobei der Körper (21) aus zwei separaten Teilen besteht, die über eine Kopplungseinrichtung miteinander gekoppelt sind.

30. Welle (20) nach Anspruch 29, wobei die Kopplungseinrichtung eine vordere Kopplungseinrichtung ist.

31. Pedalkurbel (30, 40) für ein Fahrrad, die einen Körper (31, 41) umfasst, der einen Endfläche aufweist, die mit einem Kopplungsabschnitt (32, 34) zum Koppeln mit der Welle (20) für ein Fahrrad-Tretlager nach Anspruch 20 versehen ist, wobei sich der Kopplungsabschnitt (32, 34) entlang einer Achse (Y-Y) erstreckt und an der freien Endfläche desselben Kopplungseinrichtungen zum Koppeln mit der Welle (20) umfasst, wobei die Kopplungseinrichtungen eine vordere Kopplungseinrichtung (50) umfassen und die vordere Kopplungseinrichtung (50) eine Drehantriebseinrichtung für die Welle (20) umfasst, und
die Drehantriebseinrichtung eine vordere Verzahnung (50) umfasst, die in Umfangsrichtung an der vorderen Fläche (33, 34) eines Kopplungsabschnitts (32, 34) des Pedalkurbel-Körpers (31, 34) angeordnet ist,
**dadurch gekennzeichnet, dass**
die vordere Verzahnung (50) eine Vielzahl identischer und symmetrischer Zähne (51) umfasst, jeder Zahn (51) der Vielzahl von Zähnen ein Paar seitlicher Flächen (53) umfasst, die in einer Richtung parallel zu der Längsachse (Y-Y) geneigt sind, so dass zwischen ihnen ein Winkel α gebildet wird, der einen ersten vorgegebenen Wert hat, die Zähne (51) so ausgeführt sind, dass sie den Zähnen (61) der Welle nach Anspruch 20 entsprechen, so dass Kontakt zwischen den Zähnen (61) der Welle (20) und den Zähnen (51) der Pedalkurbel nur zwischen den zusammenhängenden Seitenflächen (63, 53) vorhanden ist.

32. Pedalkurbel (30, 40) nach Anspruch 31, die des Weiteren eine Einrichtung zum Zentrieren der Welle (20) in Bezug auf die Pedalkurbel (30, 40) umfasst.

33. Pedalkurbel (30, 40) nach Anspruch 31 oder Anspruch 32, wobei der erste Wert zwischen 14° und 40° beträgt.

34. Pedalkurbel (30, 40) nach Anspruch 33, wobei der erste Wert 27° beträgt.

35. Pedalkurbel (30, 40) nach einem der Ansprüche von 31 bis 34, wobei die seitlichen Flächen (53) des Zahns (51) in Bezug auf eine radiale Ebene, die die Längsachse (Y-Y) einschließt, so geneigt sind, dass ein Winkel β zwischen ihnen gebildet wird, der einen zweiten vorgegebenen Wert hat.

36. Pedalkurbel (30, 40) nach einem der Ansprüche von 31 bis 35, wobei die erste und die zweite vordere Verzahnung (50) eine Vielzahl von Verengungen (54) umfassen und jede Verengung (54) zwischen zwei benachbarten Zähnen (51) gebildet wird und eine gekrümmte Basisfläche hat, die sich an die seitlichen Flächen (53) der Zähne (51) anschließt.

37. Pedalkurbel (30, 40) nach einem der Ansprüche von 31 bis 36, die einen Sitz zum Aufnehmen eines Lagers (35, 45) umfasst, das so eingerichtet ist, dass es die Drehung der Pedalkurbel (30, 35) in Bezug auf einen Aufnahmegehäuse (210) der Welle (20), der in einem Rahmen (101) eines Fahrrades (100) ausgebildet ist, zulässt, wenn es mit der Welle (20) verbunden ist.

38. Pedalkurbel (30, 40) nach Anspruch 37, wobei der Sitz durch eine Außenfläche des Kopplungsabschnitts (32, 34) des Pedalkurbel-Körpers (31, 41) gebildet wird.

39. Pedalkurbel (30, 40) nach Anspruch 37, die einen im Wesentlichen ringförmigen Pedalkurbel-Körperabschnitt (37, 47) radial außerhalb des Kopplungsabschnitts (32, 42) umfasst, wobei der Sitz durch eine Innenfläche des im Wesentlichen ringförmigen Pedalkörperabschnitts (37, 47) gebildet wird.

40. Pedalkurbel (30, 40) nach einem der Ansprüche von 31 bis 39, wobei die Pedalkurbel eine rechte Pedalkurbel (30) ist.

41. Fahrrad (100), das einen Rahmen (101) umfasst, der mit einem Aufnahmegehäuse (210) einer Welle (20) eines Tretlagers versehen ist, wobei sich die Welle (20) entlang einer Längsachse (X-X) erstreckt, das Tretlager des Weiteren ein Paar Pedalkurbeln (30, 40) umfasst, wenigstens eine Pedalkurbel der paarigen Pedalkurbeln (30, 40) mit wenigstens einem freien Ende (20a, 20b) der Welle (20) verbunden ist, und das Kopplungseinrichtungen (50, 60) zwischen der Welle (20) und der wenigstens einen Pedalkurbel (30, 40) umfasst;
**dadurch gekennzeichnet, dass** die Welle eine Welle nach einem der Ansprüche 20 bis 30 ist und die wenigstens eine Pedalkurbel eine Pedalkurbel nach einem der Ansprüche 31 bis 40 ist.

42. Fahrrad (100) nach Anspruch 41, wobei die erste und zweite vordere Kopplungseinrichtung (60, 50) an einer Endzone (210a, 210b) des Gehäuses (210) angeordnet sind.

43. Fahrrad (100) nach Anspruch 41, wobei die erste und die zweite vordere Kopplungseinrichtung (60, 50) außerhalb des Gehäuses (210) angeordnet sind.

44. Fahrrad (100) nach einem der Ansprüche 41 bis 43, das des Weiteren ein Paar Lager (35, 45) umfasst, die sich dazu eignen, das Rollen des Tretlagers in dem Gehäuse (210) zuzulassen, wobei wenigstens ein Lager des Paars von Lagern (35, 45) außerhalb des Gehäuses (210) angeordnet ist, und das einen Sitz umfasst, der an der wenigstens einen Pedalkurbel (30, 40) des Paars von Pedalkurbeln ausgebildet ist.

## Revendications

1. Ensemble de manivelle (10) pour un pédalier de bicyclette, comprenant :
- un axe (20) s'étendant le long d'un axe longitudinal (X-X) et comprenant une face terminale à au moins une extrémité libre (20a, 20b) ;
- au moins une manivelle (30, 40) ayant une face terminale associée à ladite face terminale libre au moins unique de l'axe (20) ;
- des moyens d'accouplement (50, 60) entre l'axe (20) et la manivelle au moins unique (30, 40) ;
sachant que les moyens d'accouplement (50, 60) comprennent un premier moyen d'accouplement frontal (60) formé sur ladite face terminale libre de l'axe (20) et un second moyen d'accouplement frontal (50) formé sur ladite face terminale de la manivelle au moins unique, les premier et second moyens d'accouplement (50, 60) étant accouplés l'un à l'autre, sachant que le premier moyen d'accouplement frontal (60) comprend un premier moyen d'entraînement en rotation et que le second moyen d'accouplement frontal (50) comprend un second moyen d'entraînement en rotation, sachant que le premier moyen d'entraînement en rotation comprend une première denture frontale (60) s'étendant circonférentiellement sur la face terminale frontale (22, 24) de l'axe (20) et que le second moyen d'entraînement en rotation comprend une seconde denture frontale (50) disposée circonférentiellement sur la face terminale frontale (33, 43) d'une partie (32, 42) d'accouplement de la manivelle (30, 40) à l'axe (20),
**caractérisé en ce que**
la première et la seconde dentures frontales (60, 50) comprennent une pluralité de dents identiques et symétriques (61, 51), chaque dent (61, 51) de la pluralité de dents comprenant une paire de surfaces latérales (63, 53) inclinées, dans une direction parallèle à l'axe longitudinal (X-X), de manière à former entre elles un angle a ayant une première valeur prédéterminée,
le contact entre les dents (61) de l'axe (20) et les dents (51) de ladite manivelle s'effectue uniquement entre les surfaces latérales associées (63, 53).

2. Ensemble de manivelle (10) selon la revendication 1, **caractérisé en ce qu'**il comprend en outre des moyens de centrage de la manivelle au moins unique (30, 40) par rapport à l'axe (20).

3. Ensemble de manivelle (10) selon la revendication 2, **caractérisé en ce que** lesdits moyens de centrage sont définis par la première et la seconde dentures frontales (60, 50).

4. Ensemble de manivelle (10) selon la revendication 1, **caractérisé en ce que** la première valeur est comprise entre 14° et 40°.

5. Ensemble de manivelle (10) selon la revendication 4, **caractérisé en ce que** la première valeur est égale à 27°.

6. Ensemble de manivelle (10) selon l'une quelconque des revendications 1 à 5, **caractérisé en ce que** les surfaces latérales (63, 53) de la dent (61, 51) sont inclinées par rapport à un plan radial contenant l'axe longitudinal (X-X), de manière à former entre elles un angle β ayant une seconde valeur prédéterminée.

7. Ensemble de manivelle (10) selon l'une quelconque des revendications 1 à 6, **caractérisé en ce que** la première et la seconde dentures frontales (60, 50) comprennent une pluralité de gorges (64, 54), sachant que chaque gorge (64, 54) est définie entre deux dents voisines (61, 51) et possède une surface de base incurvée reliée aux surfaces latérales (63, 53) des dents (61,51).

8. Ensemble de manivelle (10) selon l'une quelconque des revendications précédentes, **caractérisé en ce que** la manivelle au moins unique (30, 40) comprend un siège pour loger un palier (35, 45) conçu pour permettre la rotation du pédalier par rapport à un boîtier (210) de logement de l'axe (20) formé dans un cadre (101) d'une bicyclette (100).

9. Ensemble de manivelle (10) selon la revendication 8 en association avec la revendication 2, **caractérisé en ce que** ledit siège est défini par une surface extérieure de la partie d'accouplement (32, 42) de la manivelle au moins unique (30, 40).

10. Ensemble de manivelle (10) selon la revendication 8 en association avec la revendication 1, **caractérisé en ce que** la manivelle au moins unique (30, 40) comprend une partie de corps de manivelle (37, 47) essentiellement annulaire, radialement à l'extérieur par rapport à la partie d'accouplement (32, 42), et **en ce que** ledit siège est défini par une surface intérieure de la partie de corps de manivelle essentiellement annulaire (37, 47).

11. Ensemble de manivelle (10) selon l'une quelconque des revendications 8 à 10, **caractérisé en ce qu'**il comprend en outre un palier à roulement (3 5, 45) associé à la manivelle au moins unique (30, 40) au niveau dudit siège.

12. Ensemble de manivelle (10) selon l'une quelconque des revendications précédentes, **caractérisé en ce que** la manivelle au moins unique est une manivelle de droite (30).

13. Ensemble de manivelle (10) selon l'une quelconque des revendications 1 à 11, **caractérisé en ce que** la manivelle au moins unique est une manivelle de gauche (30).

14. Ensemble de manivelle (10) selon l'une quelconque des revendications précédentes, **caractérisé en ce que** l'axe (20) comprend une partie centrale (20c) et des parties terminales opposées (20a, 20b), et **en ce que** la partie centrale (20c) possède un diamètre supérieur à celui des parties terminales opposées (20a, 20b).

15. Ensemble de pédalier (1) d'une bicyclette, comprenant un ensemble de manivelle (10) selon l'une quelconque des revendications précédentes.

16. Ensemble de pédalier (1) selon la revendication 15, **caractérisé en ce que** l'axe (20) de l'ensemble de manivelle (10) est constitué d'une seule pièce avec une manivelle (40, 30) à l'opposé de la manivelle (30, 40) de l'ensemble de manivelle (10).

17. Ensemble de pédalier (1) selon la revendication 15, **caractérisé en ce que** l'axe (20) de l'ensemble de manivelle (10) est constitué de deux pièces séparées accouplées l'une à l'autre par des moyens d'accouplement.

18. Ensemble de pédalier (1) selon la revendication 17, **caractérisé en ce que** lesdits moyens d'accouplement sont des moyens d'accouplement frontaux.

19. Ensemble de pédalier (1) selon la revendication 15, **caractérisé en ce que** la manivelle (30, 40) de l'ensemble de manivelle (10) est une manivelle de droite ou une manivelle de gauche, et **en ce que** l'autre manivelle (40, 30) est accouplée à l'axe (20) au moyen d'un accouplement fileté (70).

20. Axe (20) pour un pédalier de bicyclette, comprenant un corps (21) s'étendant le long d'un axe longitudinal (X-X), le corps (21) comprenant, sur une face terminale d'au moins une extrémité libre (20a, 20b) dudit corps, un moyen d'accouplement pour l'accouplement avec la manivelle (30, 40) selon la revendication 31, le moyen d'accouplement comprenant un moyen d'accouplement frontal (60), sachant que le moyen d'accouplement frontal (60) comprend un moyen d'entraînement en rotation pour la manivelle au moins unique (30, 40),
et sachant que le moyen d'entraînement en rotation comprend une denture frontale (60) disposée circonférentiellement sur la face terminale frontale du corps (21),
**caractérisé en ce que**
la denture frontale (60) comprend une pluralité de dents identiques et symétriques (61), chaque dent (61) de la pluralité de dents comprenant une paire de surfaces latérales (63) inclinées, dans une direction parallèle à l'axe longitudinal (X-X), de manière à former entre elles un angle α ayant une première valeur prédéterminée,
les dents (61) sont conçues pour s'apparier avec les dents de la manivelle selon la revendication 31, de telle sorte que le contact entre les dents (61) de l'axe (20) et les dents (51) de ladite manivelle s'effectue uniquement entre les surfaces latérales associées (63, 53).

21. Axe (20) selon la revendication 20, **caractérisé en ce qu'**il comprend en outre des moyens de centrage de la manivelle au moins unique (30, 40) par rapport à l'axe (20).

22. Axe (20) selon la revendication 20 ou 21, **caractérisé en ce que** la première valeur est comprise entre 14° et 40°.

23. Axe (20) selon la revendication 22, **caractérisé en ce que** la première valeur est égale à 27°.

24. Axe (20) selon l'une quelconque des revendications 20 à 23, **caractérisé en ce que** les surfaces latérales (63) de la dent (61) sont inclinées par rapport à un plan radial contenant l'axe longitudinal (X-X), de manière à former entre elles un angle β ayant une seconde valeur prédéterminée.

25. Axe (20) selon l'une quelconque des revendications 20 à 24, **caractérisé en ce que** la denture frontale (60) comprend une pluralité de gorges (64), sachant que chaque gorge (64) est définie entre deux dents voisines (61) et possède une surface de base incurvée reliée aux surfaces latérales (63) des dents (61).

26. Axe (20) selon l'une quelconque des revendications 20 à 25, **caractérisé en ce qu'**il comprend, sur une partie terminale (20b), un filetage extérieur (70).

27. Axe (20) selon l'une quelconque des revendications 20 à 26, **caractérisé en ce que** le corps (21) comprend une partie centrale (20c) et des parties terminales opposées (20a, 20b), sachant que la partie centrale (20c) possède un diamètre supérieur à celui des parties terminales (20a, 20b).

28. Axe (20) selon l'une quelconque des revendications 20 à 27, **caractérisé en ce que** le corps (21) est constitué d'une seule pièce.

29. Axe (20) selon l'une quelconque des revendications 20 à 27, **caractérisé en ce que** le corps (21) est constitué de deux pièces séparées accouplées l'une à l'autre par des moyens d'accouplement.

30. Axe (20) selon la revendication 29, **caractérisé en ce que** lesdits moyens d'accouplement sont des moyens d'accouplement frontaux.

31. Manivelle (30, 40) pour une bicyclette, comprenant un corps (31, 41) ayant une face terminale pourvue d'une partie d'accouplement (32, 42) pour l'accouplement avec l'axe (20) pour un pédalier de bicyclette selon la revendication 20, la partie d'accouplement (32, 42) s'étendant le long d'un axe (Y-Y) et comprenant, sur sa face terminale libre, un moyen d'accouplement pour l'accouplement avec l'axe (20), ledit moyen d'accouplement comprenant un moyen d'accouplement frontal (50), sachant que le moyen d'accouplement frontal (50) comprend un moyen d'entraînement en rotation pour l'axe (20),
sachant que le moyen d'entraînement en rotation comprend une denture frontale (50) disposée circonférentiellement sur la face frontale (33, 43) d'une partie d'accouplement (32, 42) du corps de manivelle (31, 41),
**caractérisée en ce que**
la denture frontale (50) comprend une pluralité de dents identiques et symétriques (51), chaque dent (51) de la pluralité de dents comprenant une paire de surfaces latérales (53) inclinées, dans une direction parallèle à l'axe longitudinal (Y-Y), de manière à former entre elles un angle α ayant une première valeur prédéterminée,
les dents (51) sont conçues pour s'apparier avec les dents (61) de l'axe selon la revendication 20, de telle sorte que le contact entre les dents (61) de l'axe (20) et les dents (51) de ladite manivelle s'effectue uniquement entre les surfaces latérales associées (63, 53).

32. Manivelle (30, 40) selon la revendication 31, **caractérisée en ce qu'**elle comprend en outre des moyens de centrage de l'axe (20) par rapport à la manivelle (30, 40).

33. Manivelle (30, 40) selon la revendication 31 ou 32, **caractérisée en ce que** la première valeur est comprise entre 14° et 40°.

34. Manivelle (30, 40) selon la revendication 33, **caractérisée en ce que** la première valeur est égale à 27°.

35. Manivelle (30, 40) selon l'une quelconque des revendications 31 à 34, **caractérisée en ce que** les surfaces latérales (53) de la dent (51) sont inclinées par rapport à un plan radial contenant l'axe longitudinal (Y-Y), de manière à former entre elles un angle β ayant une seconde valeur prédéterminée.

36. Manivelle (30, 40) selon l'une quelconque des revendications 31 à 35, **caractérisée en ce que** la denture frontale (50) comprend une pluralité de gorges (54), sachant que chaque gorge (54) est définie entre deux dents voisines (51) et possède une surface de base incurvée reliée aux surfaces latérales (53) des dents (51).

37. Manivelle (30, 40) selon l'une quelconque des revendications 31 à 36, **caractérisée en ce qu'**elle comprend un siège pour loger un palier (35, 45) conçu pour permettre la rotation de la manivelle (30, 40), lorsqu'elle est associée à l'axe (20), par rapport à un boîtier (210) de logement de l'axe (20) formé dans un cadre (101) d'une bicyclette (100).

38. Manivelle (30, 40) selon la revendication 37, **caractérisée en ce que** ledit siège est défini par une surface extérieure de la partie d'accouplement (32, 42) du corps de manivelle (31,41).

39. Manivelle (30, 40) selon la revendication 37, **caractérisée en ce qu'**elle comprend une partie de corps de manivelle (37, 47) essentiellement annulaire, radialement à l'extérieur par rapport à la partie d'accouplement (32, 42), ledit siège étant défini par une surface intérieure de la partie de corps de manivelle essentiellement annulaire (37, 47).

40. Manivelle (30, 40) selon l'une quelconque des revendications 31 à 39, **caractérisée en ce que** ladite manivelle est une manivelle de droite (30).

41. Bicyclette (100), comprenant un cadre (101) pourvu d'un boîtier (210) de logement d'un axe (20) d'un pédalier, l'axe (20) s'étendant le long d'un axe longitudinal (X-X), le pédalier comprenant également une paire de manivelles (30, 40), au moins une manivelle de la paire de manivelles (30, 40) étant associée à au moins une extrémité libre (20a, 20b) de l'axe (20), et avec des moyens d'accouplement (50, 60) entre l'axe (20) et la manivelle au moins unique (30, 40) ;
**caractérisée en ce que** l'axe est un axe selon l'une quelconque des revendications 20 à 30 et la manivelle au moins unique est une manivelle selon l'une quelconque des revendications 31 à 40.

42. Bicyclette (100) selon la revendication 41, **caractérisée en ce que** les premier et second moyens d'accouplement (60, 50) sont disposés sur une zone terminale (210a, 210b) du boîtier (210).

43. Bicyclette (100) selon la revendication 41, **caractérisée en ce que** les premier et second moyens d'accouplement (60, 50) sont disposés à l'extérieur du boîtier (210).

44. Bicyclette (100) selon l'une quelconque des revendications 41 à 43, **caractérisée en ce qu'**elle comprend également une paire de paliers (35, 45) conçus pour permettre le roulement dudit pédalier dans le boîtier (210), sachant qu'au moins un palier de la paire de paliers (35, 45) est disposé à l'extérieur du boîtier (210) et au niveau d'un siège défini sur la manivelle au moins unique (30, 40) de la paire de manivelles.
